# EUROPEAN PATENT APPLICATION

(11) **EP 3 025 883 A1**
(43) Date of publication of application: **01.06.2016**
(21) Application number: 15185800.8
(22) Date of filing: 18.09.2015
(51) Int. Cl.: B60H 1/00, F28F 9/00

(54) **EVAPORATOR ARRANGEMENT**

(30) Priority: 27.11.2014 GB 201421066
(71) Applicant: Delphi Automotive Systems Luxembourg SA, 4940 Bascharage (LU)
(72) Inventor: Hansen, Jean-Paul, 6791 Guerlange (BE); Skinner, Neil, 8052 Bertrange (LU); Jovanovic, Branko, 6791 Athus (BE)
(74) Representative: BRP Renaud & Partner mbB Rechtsanwälte Patentanwälte Steuerberater

(57) **Abstract**

A seal (16) adapted to obtrude the peripheral orifice (P) between the external faces of an evaporator (12) and the internal faces of a housing (14) surrounding the evaporator (12). The seal (16) is an integral closed elastic band having an inner side and an outer side and adapted to be stretched and to be arranged in extension around the evaporator (12) so that, the inner side of the band contacts the evaporator (12) and, the outer side of the band contacts the housing (14).

## Description

### TECHNICAL FIELD

The present invention relates to an evaporator sealingly arranged in a housing, and more particularly to a seal for such arrangement.

### BACKGROUND OF THE INVENTION

Air conditioning systems comprise evaporators arranged in a housing, the peripheral orifice between the evaporator and the housing being obtruded by a seal made of closed-cell foams. The general shape of an evaporator is rectangular with an upstream face and a downstream face. The upper side is define by a tank made of two semi-circular sub-tank arranged side to side and forming a central longitudinal valley. Opposite to this upper tank is arranged a lower tank and, between said upper and lower tanks extend flat tubes thus defining an internal fluid path having a general U-shape, the fluid entering via one of the upper sub tank, than flowing in a first set of flat tubes to arrive into the lower tank than flowing back upwardly into a second set of flat tube so to arrive in the second upper flat tank then exit the evaporator.

In use, age, thermal changes and vibration have a tendency to alter the properties of the foam which natural elasticity tends to diminish, the foam becoming more rigid which is detrimental to the sealing function. Furthermore, in use an air stream traverses the evaporator and, water contained in said stream condenses and has a tendency to accumulate at the bottom of the valley. This accumulation of water may be a place where bacteria multiply generating unpleasant odors.

### SUMMARY OF THE INVENTION

Accordingly, it is an object of the present invention to solve the above mentioned problems or at least to mitigate some of the consequences, in providing a seal adapted to obtrude the peripheral orifice between the external faces of an evaporator and the internal faces of a housing surrounding the evaporator. Advantageously, the seal is an integral closed elastic band having an inner side and an outer side and, it is adapted to be stretched and to be arranged in extension around the evaporator. Once in place, the inner side of the band contacts the evaporator and, the outer side of the band contacts the housing.

The seal comprises a first portion and a second portion. The first portion has a first cross section adapted to be complementary arranged in a central valley provided on a face of the evaporator and, the second portion has a second cross section adapted to surround all the other faces of the evaporator.

More specifically, the first section cross section has a V-shape profile on the inner face, said V-shape being adapted to complementary lie in said central valley. Indeed, the V-shape of the seal enters the valley so the tip of the V-shape seal approaches the bottom of the valley.

Furthermore, the V-shape profile has lateral extensions forming wings at the extremities of the V. The wings are adapted to lie on the sidewalls of the valley formed by upper tanks, of the evaporator.

Also, the first section cross section has a plain rectangular profile on the outer face, said plain rectangular being adapted to be pressed against a longitudinal rib centrally provided in the housing and facing the central valley V provided in the evaporator. Once in place, the rib solicits the seal deeper in the valley and the wings against the sidewalls of the upper tanks.

The second portion cross section is rectangular.

In addition, the seal may be further provided with integral extensions forming lateral tongues adapted to protect the evaporator from direct contact with other parts. The tongue extends from the edges of the wings and, in place the tongue lie on the upper tanks, protecting the evaporator from any damages such as scratches.

Particularly, the seal is moulded in EPDM.

The invention further extend to an arrangement comprising a rectangular evaporator arranged in housing, the peripheral orifice around the evaporator being closed by a seal as previously described.

The invention further extends to a method to assemble an arrangement comprising an evaporator sealingly arranged in a surrounding housing, the method comprising the steps of:
- providing an evaporator which upper tank comprises two semi-circular upper tanks, arranged side to side so that it forms a central valley,
- providing a housing adapted to surround the evaporator, the housing being provided with a longitudinal rib extending in direction of the evaporator and facing the central valley,
- providing a seal forming a closed elastic band,
- stretching the seal in order to install it around the evaporator where it remains in extension,
- arranging the evaporator and the stretched seal inside the housing so that the seal inner side is in contact with the evaporator and, the outer side is in contact with the housing.

### BRIEF DESCRIPTION OF THE DRAWINGS

The present invention is now described by way of example with reference to the accompanying drawings in which:
Figure 1 is an exploded view of an arrangement as per the invention, the arrangement comprising an evaporator sealingly placed in housing.
Figure 2 is a magnified view presenting the lower part of the housing.
Figure 3 is a view of the seal of figures 1 & 2, as molded and before assembly.
Figure 4 is a view of the seal of figure 3, as being assembled.
Figure 5 is a magnified view of an upper corner of the evaporator and of the seal.
Figure 6 is a transverse section of the bottom portion of the arrangement of figure 1.
Figures 7, 8 and 9 are sections of three dimensional variant of arrangement, the section being made in the upper part of the housing.

### DESCRIPTION OF THE PREFERRED EMBODIMENTS

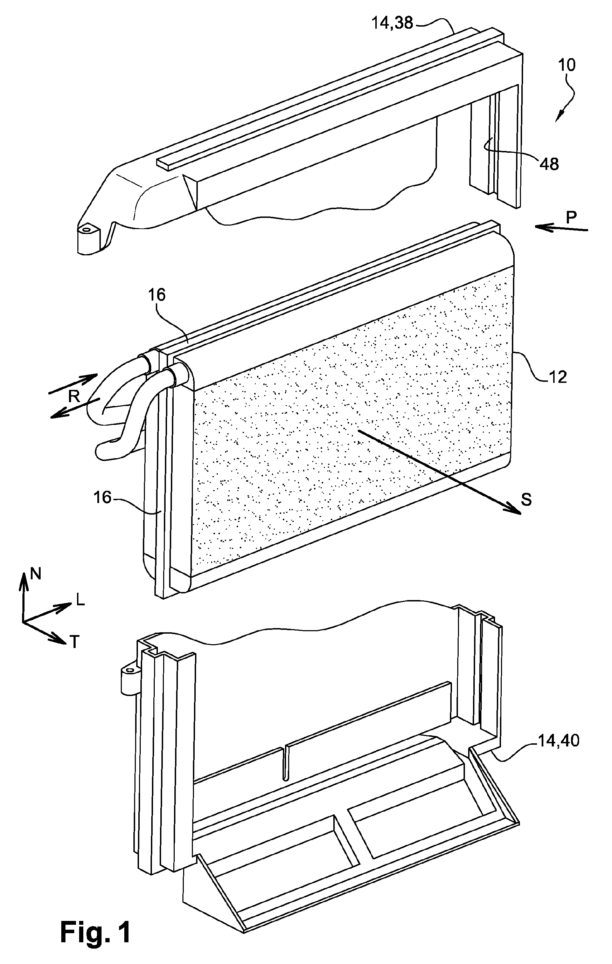

To ease and clarify the following description the orientation of figure 1 is arbitrarily chosen and, words and expressions such as "above, under, below..." may be utilized without any intention to limit the invention. Also, similar features full filling similar functions in different embodiments may be identified with same reference numbers.

As per figure 1 is represented an arrangement 10 comprising an evaporator 12 placed in housing 14, the peripheral orifice P between the evaporator 12 and the housing 14 being closed by a seal 16. The arrangement 10 is adapted to be placed in an air stream S traversing the evaporator 12 within which flows a refrigerant R so that thermal exchange between the refrigerant R and the air S can occur.

The arrangement 10 presented is a typical automobile arrangement and it will serve the purpose of the description albeit the invention be immediately derivable for any evaporator arrangements used in other technical fields.

The evaporator 12 is a rectangular parallelepiped extending along a tri-axis reference with longitudinal axis L, normal axis N and transverse axis T along which flows the air stream S.

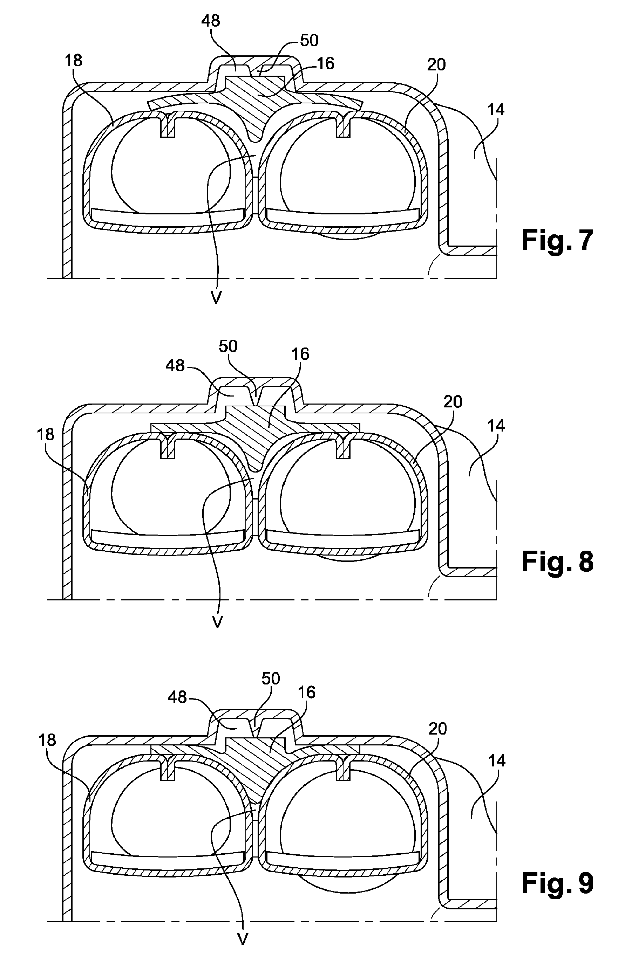

The evaporator 12 comprises an inlet upper tank 18, an outlet upper tank 20 and a transfer lower tank 22. The upper tanks 18, 20, are arranged side-by-side along the longitudinal direction L and, they both have a semi-circular cross section providing to their juxtaposed assembly a central longitudinal valley V, better visible on figures 7 to 9, the valley V having rounded side walls.

Flat tubes 24 are arranged parallel to each other extending along the normal axis N, a first set of the tubes 24 being between the inlet upper tank 18 and the lower tank 22 and, a second set of flat tubes 24 being, similarly to the first set, between the lower tank 22 and the outlet upper tank 20. Between two adjacent flat tubes 24, thin corrugated fins are arranged in order to improve the thermal exchange between the air stream S and the refrigerant R.

In such construction, the refrigerant R entering the evaporator 12 flows inside the inlet upper tank 18, then flows down inside the first set of tubes 24, arrives in the lower tank 22, and then flows back up through the second set of tubes 24 into the outlet upper tank 20 where from the refrigerant R exits the evaporator 12.

Other internal arrangements are known where, thanks to internal walls and dividers, the refrigerant R flows several times back and forth between the upper and lower tanks before exiting the evaporator 12.

For the sake of the present description, only the external shape of the evaporator 12 is of interest, said external shape comprising, as previously described, the central valley V on the upper face of the evaporator while the three other faces, the bottom face and lateral faces, are substantially plane.

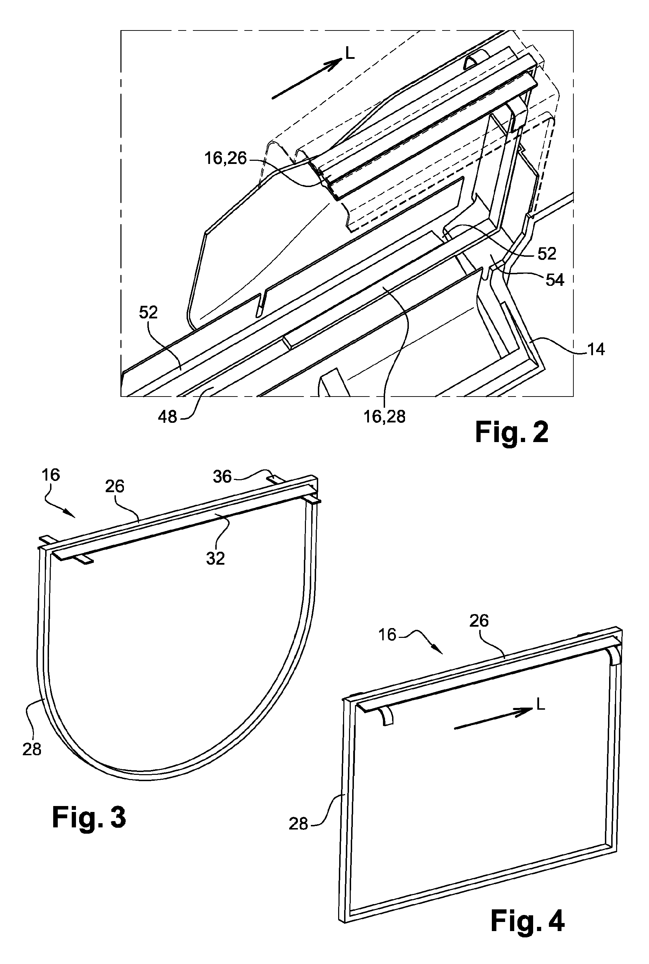

The seal 16, as it is individually presented on figures 3 and 4, forms a closed loop band made of elastic material such as a rubber based ethylene propylene diene monomer (EPDM) . The seal 16 comprises a first portion 26 having a specific cross section adapted to complementary adjust to the upper face of the evaporator 12 and, a second portion 28 with a rectangular cross section.

The cross section of the first portion 26 comprises a main triangular V-shape body 30 pointing inwardly, inside the closed loop, and with base upwardly oriented. All along the longitudinal length of said main triangular V-shape body 30 laterally extend plane extensions 32 forming flat wings 32 extending from the body 30 to a longitudinal continuous edge 34. Furthermore, as represented on the figures, from the extremities of the lateral edge 34 further laterally extend tongues 36. Four of them are represented as more can easily be provided on the seal 16.

As said priory, the cross section of the second portion 28 of the seal 16 is rectangular and, said second section 28 connects to the longitudinal extremities of the first section 26 through right angles and, when molded and not yet in place, the second section 28 forms a continuous non-angled band, represented on figure 3, as a semi-oblong smooth shape.

The housing 14 is the assembly of an upper case 38 and a lower case 40 which complementary assembled together form an air conduct, part of the air conditioning system of a vehicle. At the open end of said air conduct, the housing 14 surrounds the lateral faces of the evaporator 12 with upper 42, lateral 44 and lower 46 faces of the housing 14. The upper 42, lateral 44 and lower 46 faces of the housing 14 are provided with a continuous rectangular groove 48 axially extending and centrally arranged in the respective faces. Furthermore, in the upper groove 48, provided in the upper inner face 42 of the housing 14 with section represented on figures 7 to 9, is provided with a central rib 50 forming a long longitudinal tooth inwardly protruding from the bottom of the groove 48, drawn at the top of the figures, the rib 50 longitudinally L extending all along said upper face 42. Also, the lower face 46 of the housing 14 is laterally provides with two longitudinal gutters 52 joined in the vicinity of the extremities of the face 46 by two transverse smaller gutters 52. So the lower face 46 comprises a central portion between the transverse and longitudinal gutters 52 and, two small plateaus 54 at each extremity, the groove 48 being formed in the plateaus and in the central portion.

The assembly of the arrangement 10 is now described. The seal 16, molded with smooth shape, figure 3, is first stretched and extended to be arranged around the upper, lower and lateral faces of the evaporator 12, as shown on figure 1.

The first portion 26 of the seal is adjusted on the upper face of the evaporator 12 so the main body 30 complementary arranges in the valley V, the two flat wings lying on the circular walls of the inlet 18 and outlet 20 upper tanks and covering the summit of the tanks and, the four tongues 36 further laterally extending on the side of the tanks 18, 20. The second portion 28 of the seal is stretched to a rectangular shape, figure 4, and arranged against the lateral and bottom faces of the evaporator 12. As the seal 16 is made of elastic material it can be stretched and, once placed around the evaporator 12 it keeps a relative tension that maintains the seal 16 in position.

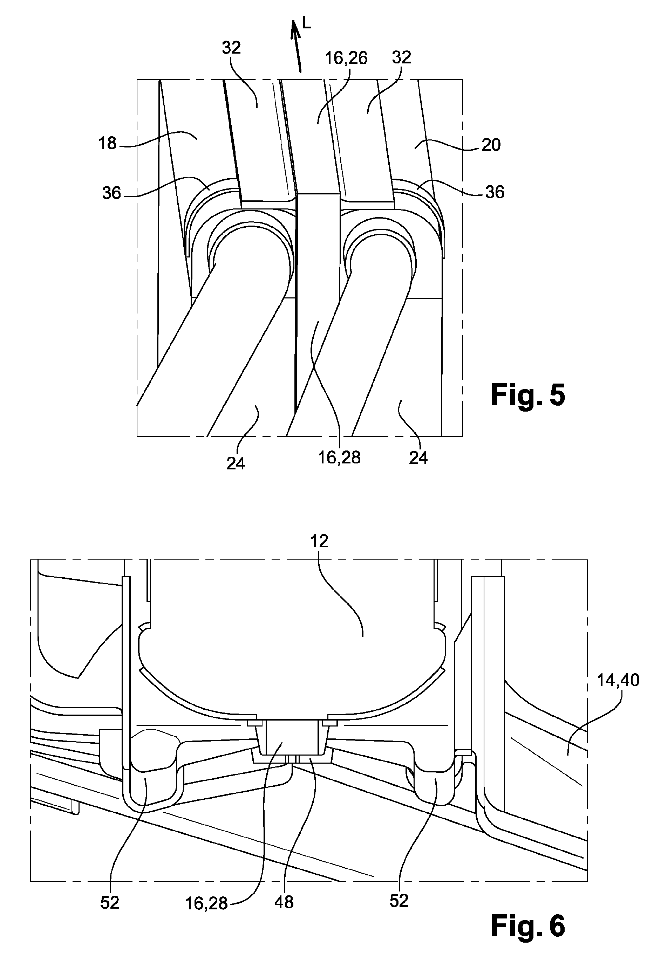

The evaporator 12 and the seal16 are then downwardly slid in the lower case 40, the rectangular section of the seal 16, second portion 28, slinding inside the groove 48 until it reaches the lower face 46, the corresponding part of the seal 16 adjusting in the groove 48 provided in the plateaus 54 and the central portion of said face 46, as shown in figure 6. The longitudinal gutters 52 remain in fluid connection thanks to the transverse gutters 52 which extend bellow the seal 16. Once this is in place in the lower case 40, the housing 14 is closed by complementary arranging the upper case 38 on the top of the lower case 40. The first portion 26 of the seal adjusts in the groove 48 of the upper face and, as represented in figures 7 to 9, the rib 50 comes in contact with the base face of the seal 16.

Figure 7, 8 and 9 represent three alternative cases of dimensioning.

In figure 7, the evaporator 12 is slightly short in height measured along the normal axis N. Consequently the lateral wings 32 upwardly push the seal toward the rib 50 while the extremities of the wings contact the upper tanks 18, 20.

In figure 8, the evaporator 12 has a nominal height and the wings 32 lie flat over the summit of the tanks.

In figure 9, the evaporator 12 has a longer height and the rib 50 pushes the seal 16 deep inside the valley V.

When in use, the air stream S flows through evaporator 12 and heat exchange occurs between the air S and the refrigerant R flowing inside the evaporator 12. The air S cools while the refrigerant R heats up. In doing so the moisture contained in the air condensates and forms water droplets that displace along the walls of the evaporator 12. Because of the seal 16, the droplets cannot accumulate in the central valley V and are forced to follow other routes leading to the gutters 52 wherefrom the water is evacuated.

### REFERENCES UTILIZED IN THE DESCRIPTION

- 10: arrangement
- 12: evaporator
- 14: housing
- 16: seal
- 18: inlet upper tank
- 20: outlet upper tank
- 22: lower tank
- 24: flat tubes
- 26: first portion of the seal
- 28: second portion of the seal
- 30: main triangular V-shape body
- 32: flat wings
- 34: longitudinal edge of the wing
- 36: tongue
- 38: upper case
- 40: lower case
- 42: upper face of the housing
- 44: lateral faces of the housing
- 46: lower face of the housing
- 48: groove
- 50: rib
- 52: gutter
- 54: plateau

- P: peripheral orifice
- S: air stream
- R: refrigerant
- L: longitudinal axis
- N: normal axis
- T: transverse axis
- V: central longitudinal valley

## Claims

1. Seal (16) adapted to obtrude the peripheral orifice (P) between the external faces of an evaporator (12) and the internal faces of a housing (14) surrounding the evaporator (12), **characterized in that** the seal (16) is an integral closed elastic band having an inner side and an outer side and adapted to be stretched and to be arranged in extension around the evaporator (12) so that, the inner side of the band contacts the evaporator (12) and, the outer side of the band contacts the housing (14).

2. Seal (16) as claimed in the preceding claim comprising a first portion (26) having a first cross section adapted to be complementary arranged in a central valley (V) provided on a face of the evaporator (12) and, a second portion (28) having a second cross section adapted to surround all the other faces of the evaporator (12).

3. Seal (16) as claimed in claim 2 wherein the first section cross section has a V-shape profile on the inner face, said V-shape being adapted to lie in said central valley (V).

4. Seal (16) as claimed in claim 3 wherein the V-shape profile has lateral extensions forming wings (32) at the extremities of the V, said wings (32) being adapted to lie on the sidewalls of the valley formed by upper tanks (18, 20) of the evaporator (12).

5. Seal (16) as claimed in any one of the claim 2 to 4 wherein the first section cross section has a plain rectangular profile on the outer face, said plain rectangular being adapted to be pressed against a longitudinal rib (50) centrally provided in the housing (14) and facing the central valley (V) provided in the evaporator (12).

6. Seal (16) as claimed in any one of the claims 2 to 5 wherein the second portion cross section is rectangular.

7. Seal (16) as claimed in any one of the preceding claims further provided with integral extensions forming lateral tongues (36) adapted to protect the evaporator (12) from direct contact with other parts.

8. Seal (16) as claimed in any one of the preceding claims characterized it is moulded in EPDM.

9. Arrangement (10) comprising a rectangular evaporator (12) arranged in housing (14), the peripheral orifice (P) around the evaporator (12) being closed by a seal (16) as claimed in any one of the preceding claims.

10. Method to assemble an arrangement (10) comprising an evaporator (12) sealingly arranged in a surrounding housing (14), the method comprising the steps of:
- providing an evaporator (12) which upper tank comprises two semi-circular upper tanks (18, 20) arranged side to side so that it forms a central valley (V),
- providing a housing (14) adapted to surround the evaporator (12), the housing being provided with a longitudinal rib (50) extending in direction of the evaporator (12) and facing the central valley (V),
- providing a seal (16) forming a closed elastic band,
- stretching the seal (16) in order to install it around the evaporator (12) where it remains in extension,
- arranging the evaporator (12) and the stretched seal (16) inside the housing (14) so that the seal inner side is in contact with the evaporator and, the outer side is in contact with the housing.
